# EUROPEAN PATENT APPLICATION

(11) **EP 4 814 667 A1**
(43) Date of publication of application: **30.09.2026**
(21) Application number: 26161627.0
(22) Date of filing: 02.03.2026
(51) Int. Cl.: G06F 3/01

(54) **SYSTEM AND METHOD FOR MITIGATING CYBERSICKNESS AND MOTION SICKNESS**

(30) Priority: 26.03.2025 US 202519090615
(71) Applicant: Honeywell International Inc., Charlotte, NC 28202 (US)
(72) Inventor: FINSETH, Tor, Charlotte, 28202 (US); DE MERS, Robert, Charlotte, 28202 (US); LUBOLD, Nichola, Charlotte, 28202 (US)
(74) Representative: Ingrassia, Fisher & Lorenz UK Ltd.

(57) **Abstract**

A method for mitigating cybersickness of a user engaged in an operation of a 3D-simulated reality device includes receiving a sensed data stream indicating a user condition obtained from a plurality of sensors while the user is engaged in the operation of the device, fusing the sensed data stream into a fused data stream based on a sensor fusion model, and determining a state for a plurality of classifications, such as a physiological state, a physical state, and a device state. Each state identifies a context of the user to determine whether the user is susceptible to cybersickness. The method includes determining a mitigation strategy for modifying a display content, a visual representation or a combination thereof based on the physiological state, the physical state, the device state, and a mitigation strategy model, and implementing the mitigation strategy to change the physiological condition of the user.

## Description

### TECHNICAL FIELD

The present disclosure relates to systems and methods for mitigating cybersickness and motion sickness, particularly within virtual reality and/or augmented reality environments.

### BACKGROUND

Three-dimensional simulated reality technology or simply simulated reality (SR), which includes virtual reality and augmented reality has rapidly evolved, providing increasingly immersive experiences for users across various applications, including gaming, training simulations, education, and therapeutic uses. Despite these advancements, a significant challenge remains - many users experience adverse symptoms commonly referred to as cybersickness. Cybersickness, akin to motion sickness, is characterized by symptoms such as nausea, dizziness, sweating, eye strain, and disorientation. These symptoms can severely limit the usability and enjoyment of SR systems, hindering widespread adoption and user satisfaction.

Cybersickness and motion sickness are related conditions that cause discomfort and disorientation in individuals exposed to certain visual or physical stimuli. Motion sickness occurs when there is a sensory mismatch between the visual system, the vestibular system (which senses motion, equilibrium, and spatial orientation), and proprioception (the sense of the relative position of body parts). This commonly occurs during travel by car, boat, or airplane. Symptoms of motion sickness include nausea, dizziness, sweating, and vomiting. Cybersickness, on the other hand, is a specific type of motion sickness induced by exposure to virtual environments. It manifests through similar symptoms such as nausea, dizziness, eye strain, and headaches but is triggered by visual stimuli that creates a sensory conflict within the user's perception of movement and orientation.

Despite sharing similar symptoms, cybersickness and motion sickness arise from different causes. Motion sickness typically results from actual physical movement that the body experiences that is out-of- sync with the visual information perceived by the eyes, such as reading a book in a moving car. In contrast, cybersickness is induced by visual motion that the eyes perceive in a virtual environment without corresponding physical movement sensed by the vestibular system. This difference is crucial because it informs the strategies used to mitigate each condition. Motion sickness can often be alleviated by changing the visual focus or taking medication, whereas cybersickness requires more complex interventions due to the immersive nature of SR environments.

To mitigate cybersickness, SR systems may employ strategies aimed at reducing the sensory conflict that causes discomfort. These strategies include hardware and software optimizations such as reducing latency, increasing frame rates, and providing a high refresh rate for smooth visual transitions. Another strategy is to limit the field of view (FOV) during intense motion sequences to reduce the visual motion perceived by the user. Additionally, SR systems may incorporate rest frames or fixed points within the virtual environment to provide a stable reference that can help orient the user and reduce disorientation. Advanced SR systems may also use head and motion tracking to ensure that responses in the virtual environment to user movements are as seamless and natural as possible.

Accordingly, there is a need in the art to further understand the underlying causes of cybersickness, identify the onset of cybersickness and effectively implement mitigation techniques for further improving SR systems that can enhance user comfort and extend the duration of SR sessions. The present disclosure addresses the above-mentioned needs and others.

### SUMMARY

This summary describes select concepts in a simplified form that are further described in the Detailed Description. As such, this is merely a summary and not intended to identify key or essential features of the claimed subject matter, nor is it intended to be used as an aid in determining the scope of the claimed subject matter.

In one form, the present disclosure includes a method for mitigating cybersickness of a user engaged in an operation of a 3D-simulated reality device (hereafter referred to as "the device") having a visual display. The method includes receiving a sensed data stream indicating a user condition obtained from a plurality of sensors while the user is engaged in the operation of the device. The user condition includes at least one of a user posture, a user movement, a user eye tracking, or a user biometric. The method includes fusing the sensed data stream into a fused data stream based on a sensor fusion model; and determining a state for a plurality of classifications. Each state for the plurality of classifications identifies a context of the user while engaged with the device to determine whether the user is susceptible to cybersickness. The step of determining a state further includes predicting a physiological state of the user for a physiological classification based on a physiological state prediction model and the fused data stream; predicting a physical state of the user for a physical classification based on a physical state prediction model and the fused data stream; and determining a device state of the visual display being engaged by the user for a device classification based on a device state model. The device state model includes visual display data indicating a view mode of the visual display. The method further includes determining a mitigation strategy for modifying a display content, a visual representation or a combination thereof based on the physiological state, the physical state, the device state, and a mitigation strategy model; and implementing the mitigation strategy to change a physiological state of the user. The step of implementing the mitigation strategy further includes scheduling the mitigation strategy for modifying the visual display viewed by the user at a predetermined time; generating a control command to implement the mitigation strategy to modify the visual display at the predetermined time; and controlling the visual display based on the control command.

In one form, the plurality of classifications further includes an environmental classification representing an environment surrounding the user while the user is engaged with the device; and the step of determining the state for the plurality of classifications further includes predicting an environmental state for the environmental classification based on the fused data stream and an environmental state prediction model.

In some examples, the environmental classification includes a vehicle classification indicative of a vehicle movement metric, a vehicle location, and a vehicle type of a vehicle associated with the user while engaging with the device; and the step of determining the environmental state for the environmental classification includes predicting a vehicle state for the vehicle classification based on the fused data stream and a vehicle state model.

In at least one form, the plurality of classifications further includes a task classification indicating a type of task that the user is engaged in while using the device; and the step of the determining the state for the plurality of classifications further includes predicting a task state for the task classification based on the fused streamed data and a task state model.

In one example, the step of determining the mitigation strategy includes identifying the display content to be displayed via the visual display. The display content includes a dialog box having alphanumeric text being displayed within the visual display. The step of determining the mitigation strategy further includes scheduling the display content to be displayed within a predetermined time frame on the visual display and displaying the display content on the visual display of the device.

In some aspects, the step of determining the mitigation strategy includes: identifying a visual modification to alter the visual representation to be displayed on the visual display; determining a schedule for the visual modification to alter the visual representation that is displayed on the visual display; and displaying the visual modification altering the visual representation that is displayed on the visual display according to the schedule.

In one example, the physiological state for the physiological classification includes a cybersickness state, a motion sickness state, a stress state, or a combination thereof; and the step of the predicting the physiological state for the physiological classification includes: predicting that the physiological state for the physiological classification is the cybersickness state; and determining the mitigation strategy based on the physiological state being the cybersickness state and the mitigation strategy model.

In some examples, the method includes combining each state of the plurality of classifications into a context state stream data; selecting an adaptation model from a plurality of adaptation models based on an if-then algorithm and the context state stream data; and determining the mitigation strategy based on the context state stream data and the adaptation model selected.

In another form, the step of fusing the sensed data stream includes: directing the sensed data stream from each of the plurality of sensors into one or more sensor nodes based on complimentary types of data preselected to determine the state of the plurality of classifications; processing the sensed data stream received at each sensor node to form an aggregated data stream of the complimentary types of data; and fusing each aggregated data stream into the fused data stream based on the sensor fusion model.

In yet another aspect, the sensor fusion model is a weighted matrix; and the step of fusing the sensed data stream further includes fusing the sensed data stream into the fused data stream based on the weighted matrix and the sensed data stream.

In still another example, the method includes assigning a weight to the sensed data stream for each sensor of the plurality of sensors based on a sensor type, a sensed data metric type relative to an output stream transmitted from each sensor, or a combination thereof.

In one form, the method includes tracking a frequency data of use for each sensed data stream associated with each sensor. The frequency data of use indicates how often each sensed data stream associated with each sensor is used for predicting the state for the plurality of classifications. The method further includes determining whether to modify the weight associated with at least one sensor of the plurality of sensors based on the frequency data; determining an updated weight for the at least one sensor based the frequency data; and applying the updated weight to the sensed data stream associated with the at least one sensor to form the fused data stream.

In some forms, the method includes creating a user profile having a user selected preference associated with the control command; and modifying the control command based on the user selected preference.

In other aspects, the method includes determining when the physiological condition of the user has changed within a period of time; and storing the mitigation strategy in the user profile when the physiological condition of the user has changed.

In at least one example, the method includes generating a user profile associated with the user engaging with the device. The user profile includes a mitigation strategy preference defining a previously stored mitigation strategy that changed a previous physiological state of the user within a predetermined period of time. The method also includes predicting a current physiological state for the physiological classification based on the physiological state prediction model and the fused data set. The current physiological state is indicative of the physiological condition of the user. The method also includes determining whether the current physiological state of the physiological classification associated with the user matches the previous physiological state associated with the mitigation strategy preference; retrieving the previously stored mitigation strategy when the current physiological state matches the previous physiological state associated with the mitigation strategy preference; and implementing the previously stored mitigation strategy for controlling the visual display.

In some forms, the method includes determining when the mitigation strategy has altered the physiological state for the physiological classification of the user within a predetermined period of time; and implementing a second mitigation strategy that controls the visual display after the mitigation strategy has altered the physiological state of the user, wherein the second mitigation strategy accelerates a change in the physiological state for the physiological classification for the user.

In one example, the method includes determining when the mitigation strategy has not altered the physiological state for the physiological classification of the user within a predetermined period of time; and implementing a second mitigation strategy that controls the visual display when (i) a predetermined period of time expires; and (ii) the mitigation strategy has not altered the physiological state of the user.

In some aspects, the method includes storing the state for each of the plurality of classifications when the physiological state indicates a cybersickness state. The plurality of classifications further includes a previous task state being engaged by the user while engaging the device. The method also includes identifying a current task state for a task that the user is currently engaged with using the visual display based on the fused data stream and a task state model; determining whether the current task state matches the previous task state; determining a previously used mitigation strategy to mitigate the cybersickness state when the current task state matches the previous task state; and implementing the previously used mitigation strategy at a predetermined time period prior to the user experiencing a current physiological state associated with the cybersickness state.

In at least one example, the method includes receiving a user input indicative of a user selected preference for overriding the control command to mitigate the physiological state of the user; modifying the mitigation strategy based on the user selected preference; and implementing a modified mitigation strategy to adapt the control command to the visual display.

In some aspects, the fused data stream includes a classified data set and a sensed data stream. The classified data set includes the sensed data stream from one or more sensors that is aggregated at a sensor node of a plurality of sensor nodes based on complimentary types of data preselected to determine a state associated with at least one of the plurality classifications, such as the physical classification, the physiological classification and the environmental classification. The step of determining the mitigation strategy further includes determining the mitigation strategy for modifying the display content, a visual representation or a combination thereof of the visual display of the device being viewed by the user based on the physiological state, the physical state, the device state, the mitigation strategy model and the sensed data stream.

### BRIEF DESCRIPTION OF DRAWINGS

Implementations of the subject matter are hereinafter described in conjunction with the following drawing figures, wherein like numerals denote like elements.
FIG. 1 is a diagrammatic view of an exemplary user environment for executing a method for mitigating a physiological condition of a user engaging with a 3D simulated-reality device (hereafter referred to as "the device") incorporating the method, according to the disclosure;
FIG. 2 is a flow chart of an overview of the method disclosed in FIG. 1, according to the disclosure;
FIG. 3 is a block diagram of a plurality of sensors associated with the user of the device, according to the disclosure;
FIG. 4 is a flow chart of a routine for fusing the sensed data stream of the method of FIG. 2, according to the disclosure;
FIG. 5 is a block diagram of an example sensor fusion module executing the routine of FIG. 4, according to the disclosure;
FIG. 6 is a flow chart of a routine for determining a state for the plurality of classifications for the method provided in FIG. 2, according to the disclosure;
FIG. 7 is a block diagram of an example context awareness module executing the routine of FIG. 6, according to the disclosure;
FIG. 8 is a flow chart of a routine for determining a mitigation strategy for modifying display content of the method provided in FIG. 2, according to the disclosure;
FIG. 9 is a block diagram of an example adaptation logic controller operating the routine of FIG. 8, according to the disclosure;
FIG. 10 is a block diagram of an example mitigation determination module of the adaptive logic controller of FIG. 9, according to the disclosure;
FIG. 11 is a flow chart of a routine for fusing the sensed data stream into the fused data stream of the method of FIG. 2, according to the disclosure;
FIG. 12 is a flow chart of a routine for determining the mitigation strategy of the method of FIG. 2, according to the disclosure;
FIG. 13 is a flow chart of a routine for determining a mitigation strategy, according to the disclosure;
FIG. 14 is a flow chart of a routine for determining a mitigation strategy, according to the disclosure; and
FIG. 15 is a block diagram of a system operating the method of FIG. 2, according to the disclosure.

### DETAILED DESCRIPTION

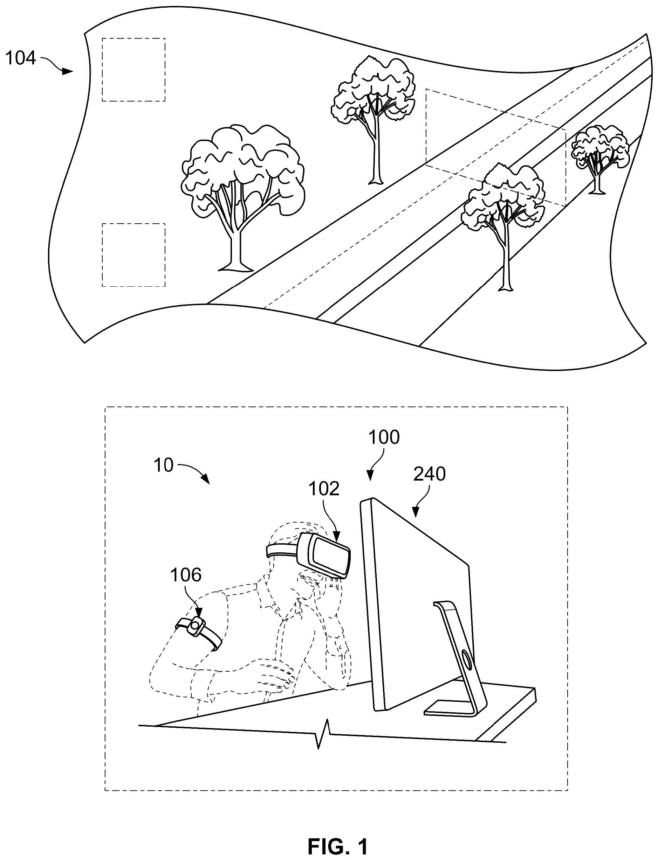

The following detailed description includes example implementations that do not limit the subject matter of the application and uses thereof. With reference to FIGS. 1-2, the present disclosure provides a method 200 for mitigating a physiological condition of a user 10 operating a 3D simulated-reality device (hereafter referred to as "the device") 102 having a visual display 104. The method 200 is implemented in a system 100 that includes the device 102 and a plurality of sensors 106 in communication with the device 102. This technology can be implemented in a variety of examples of the device 102, such as a head-mounted device (e.g., a headset and a pair of smart glasses) or the like. The device 102 may be operated in one of the following simulated reality modes of operation: eXtended Reality (XR), mixed reality (MX), augmented reality (AR) or virtual reality (VR), which are collectively referred to herein as simulated reality or SR. This technology may be employed with the user engaged in different activities, such sitting or standing in a stationary location (e.g., home or office), a vehicle (e.g., automobile, airplane, or a simulated vehicle), walking/running from one location to another, or the like.

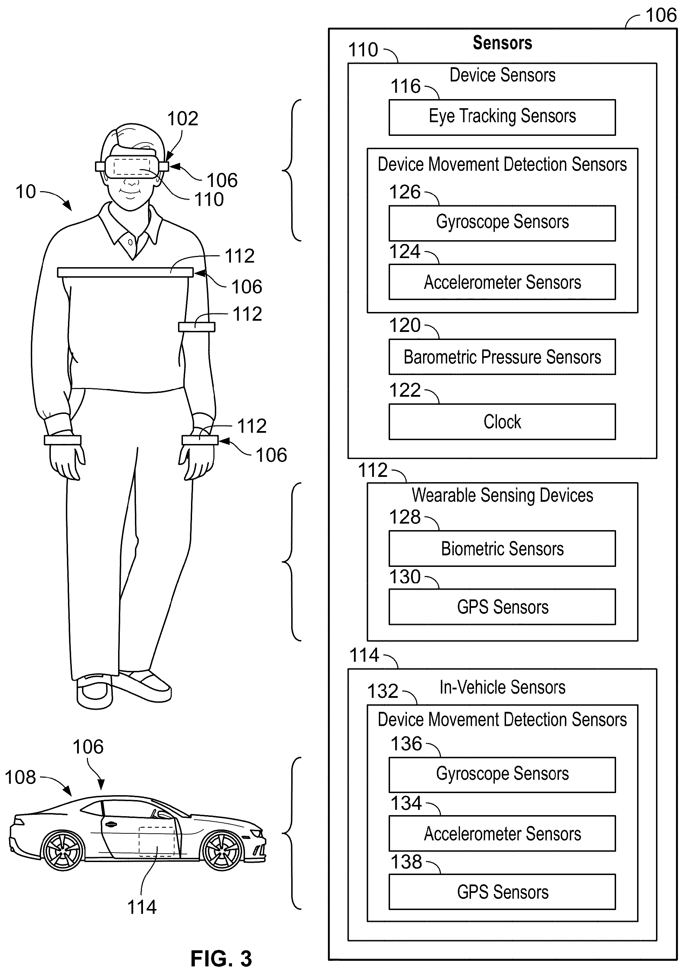

Referring in FIG. 3, the sensors 106 may take the form of a plurality of device sensors 110, one or more wearable sensing devices 112, and one or more in-vehicle sensors 114 in one example. In one form, the device sensors 110 include an eye tracking and gaze sensor 116, one or more device movement detection sensors 118, a barometric pressure sensor 120, a clock 122, and the like. In one example, the device movement detection sensors 118 include an accelerometer sensor 124, a gyroscope sensor 126, and the like. In one form, the wearable sensing device 112 includes a plurality of biometric sensors 128, a global positioning system (GPS) sensor 130, or the like. In some embodiments, the in-vehicle sensors 114 include a plurality of vehicle movement detection sensors 132 include an accelerometer sensor 134, a gyroscope sensor 136, a GPS sensor 138, and the like. In some forms, the accelerometer sensor 124, 134 senses movement, such as a velocity or acceleration of the respective device 102 or vehicle 108, and outputs a sensed movement data stream in response thereof. The gyroscope sensor 126, 136 senses rotational motion of the respective device 102 or vehicle 108 and outputs a sensed motion data stream in response thereof. The eye tracking sensor 116 measures a position and a movement of the user's eyes and outputs a sense eye data stream in response thereof. The biometric sensors 128 detect heart rate, sweat, breathing patterns, muscle activity and output, in response thereof, a sensed biometric data stream. In some examples, the biometric sensors 128 include a temperature sensor (not shown), heart rate monitor sensors (e.g., EKG sensors) (not shown), sweat sensors (e.g., a skin conductance sensor) (not shown), a breathing pattern sensor (not shown), a magnetometer sensor (not shown) or the like. The GPS sensor 130, 138 determines a location of the device 102, and outputs a sensed GPS data stream in response thereof. In one form, the clock 122 provides time keeping functions for the device 102 and outputs a time function data stream.

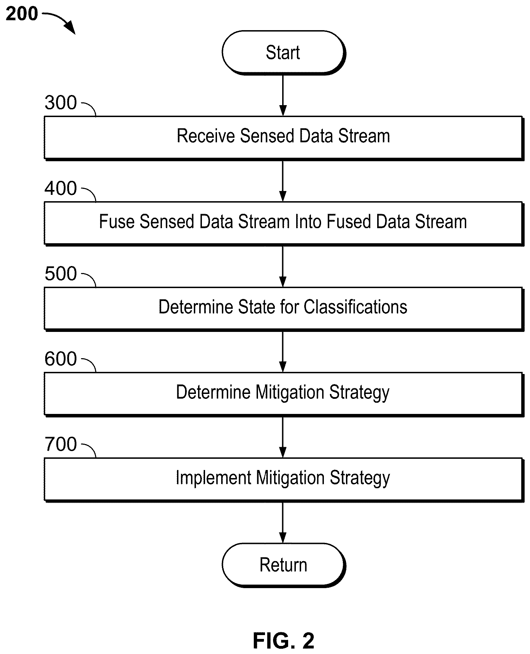

Now referring to FIGS. 2-3, the method 200 will be further disclosed and executed by the device 102. The device 102 executes the method 200 at START and proceeds to routine 300. At routine 300, the device 102 receives a sensed data stream from the plurality of sensors 106. The sensed data stream includes raw data or processed data, which measures or indicates a condition of the user 10, the device 102 or a vehicle 108. In one example, the condition of the user 10 may include: user posture (e.g., sitting, standing), user movement (e.g., velocity or acceleration representing bodily movement), user eye tracking, user eye gaze, and user biometric characteristics that are obtained while the user 10 is engaged with the device 102. In some forms, the biometric characteristics include user speech, user temperature, sweat levels, user heartbeat, user oxygen level, and the like. After receiving the sensed data stream, the device 102 proceeds from routine 300 to routine 400.

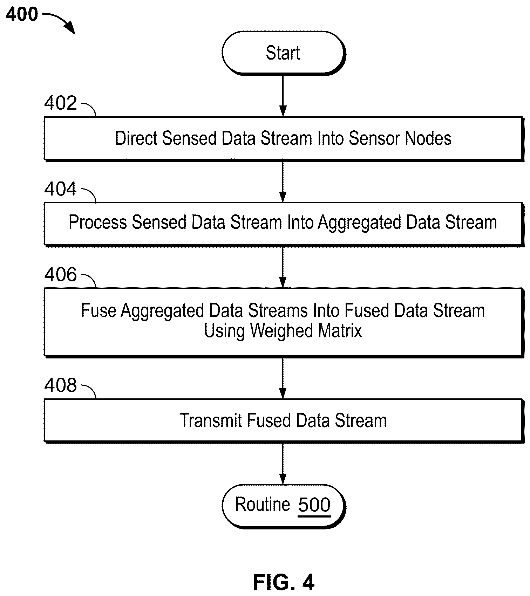

At routine 400, the device 102 fuses the sensed data stream into a fused data stream using a sensor fusion module 140 (See FIG. 4). In one form, the fused data stream includes the sensed data stream from at least one sensor 106 of the plurality of sensors 106 and aggregated data fused together based on one or more of a plurality of classifications. Each classification defines a context or circumstance that aids users in understanding the setting of the user 10 while engaging with the device 102. In some forms, the plurality of classifications includes a spatio-temporal classification, a mitigation classification, an environmental classification, a physical classification of the user, a physiological classification of the user, an SR device classification, and a task classification. In one form, each predetermined classification identifies a type of condition or activity associated the user 10, the device 102, the vehicle 108, or the environment of the user 10 that can contribute to cybersickness, motion sickness, and/or stress, while the user 10 interacts with the device 102. In other forms, the device 102 fuses the aggregates data based on at least one of the plurality of classifications. Once the fused data stream has been generated, the device 102 proceeds from routine 400 to routine 500.

At routine 500, the device 102 determines a state for the plurality of classifications using a context awareness module 142 (See FIG. 4). In one example, the plurality of classifications is stored in a context database 143 of the context awareness module 142. In one form, each classification includes two or more states. Each state identifies a condition of the context of the user 10, the device 102, the vehicle 108, and/or the environment of the user 10 for its respective classification while the user 10 is engaged with the device 102. For example, the user 10 may be sitting in a vehicle simulation playing a video game. The routine 500 may determine the state for the physical classification as one of a standing state, an in-movement state, or a sitting state. In this case, the routine 500 determines that the physical classification has a state equal to a sitting state. In one form, the device 102 determines a state for the plurality of classifications based on the fused data stream and the classification state model 150. After determining the state for each classification, the device 102 proceeds from routine 500 to routine 600.

During routine 600, the device 102 determines a mitigation strategy for modifying at least one of a display content, a visual representation, an audio data or a combination thereof based on the states of one or more classifications and a mitigation strategy model 192. In one form, the device 102 may utilize one or more states of the plurality of classifications in isolation or combination with one another to determine the mitigation strategy to alter the physiological condition of the user. In some examples, the mitigation strategy changes one or more of the following: the display content (e.g., quality, abstraction, or/and quantity), visual representation (e.g., style, visual form, number of representations), scheduling of the display content and/or visual representation (e.g., times, duration, and/or prioritization), audio data or a combination thereof. After determining the mitigation strategy, the device 102 proceeds from routine 600 to routine 700.

At routine 700, the device 102 implements the mitigation strategy to change the physiological condition of the user. In one example, the device 102 generates one or more control commands to control the visual display 104, an audio device (not shown) of the device 102, or a combination thereof based on the mitigation strategy predicted. More specifically, the device 102 modifies the display content, the visual representation, or the combination thereof, based on the one or more control commands and proceeds from routine 700 to Return and the method 200 is repeated.

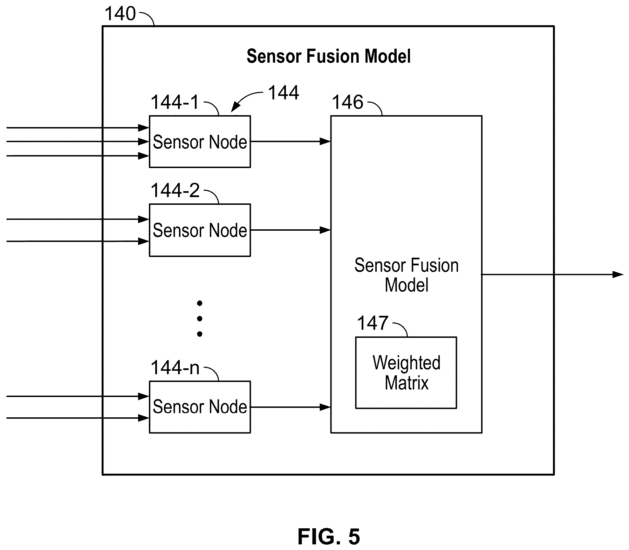

The routine 400 for fusing a sensed data stream into a fused data stream is illustrated in FIGS. 4 and 5 and provides further details for the method 200 as referred to in FIG. 2. The routine 400 beings at START and proceeds to step 402. At step 402, the routine 400 directs the sensed data stream from the plurality of sensors 106 to the sensor fusion module 140 and proceeds to step 404.

At step 404, the routine 400 processes at least a portion of the sensed data steam into an aggregated data stream using the sensor fusion module 140. In one embodiment, the sensor fusion module 140 includes a plurality of sensor nodes 144-1, 144-2, 144-n and a sensor fusion model 146. For the sake of brevity, the sensors 144-1, 144-2, 144-n shall be individually and collectively be referred to as the sensor(s) 144. In one form, each sensor node 144 receives complimentary types of data for a specific classification. In one form, the complimentary types of data may be preselected based on a sensor fusion level. Each sensor node 144 aggregates the sensed data stream from one or more sensors 106 based on the sensor fusion level assigned to the specific node. For example, the sensor fusion level includes one of a data level fusion, a feature level fusion, or a decision or classification level fusion. In one form, the data level fusion aims to aggregate raw data from two or more sensors from homogenous sources to achieve a more accurate and synthetic measurements. For example, data from a heart monitor sensor and a perspiration sensor may be fused to provide a more accurate and synthetic assessment of the cybersickness, motion sickness, stress, or the like. In some forms, the feature level fusion combines the sensed data streams that exhibit the same/similar features associated with the user. In one example, the similar features include a posture, heartbeat, and respiration of the user 10 that is aggregated together to provide a more accurate and synthetic assessment of the user activity. The decision level fusion aggregates sensed data streams from one or more sensors that correspond to a specific classification. For example, the sensed data streams related to perspiration, heartbeat, and eye gaze may be collected and aggregated to predict a physiological state. After aggregating the sensed data stream, the routine 400 proceeds from step 404 to step 406.

The routine 400 fuses each aggregated data stream into a fused data stream based on the sensor fusion model 146 at step 406. In some aspects, the fused data stream includes a classified data set and a sensed data stream. The classified data set includes the sensed data stream from one or more sensors that is aggregated at a sensor node of a plurality of sensor nodes based on complimentary types of data preselected to determine a state associated with at least one of the plurality classifications, such as the physical classification, the physiological classification and the environmental classification. In one form, the sensor fusion model 146 is a weighted matrix 147. The weighted matrix includes a predetermined weighting factor for each of the plurality of sensors. The weighting factor may be assigned to the sensed data stream for each sensor based on a sensor type, a sensor data metric, or a combination thereof. In another form, the sensor fusion model 146 may include a sensor fusion algorithm, such as Kalman filter, a convolutional neural network, or a neutral network. After fusing the aggregated data stream, the routine 400 proceeds from step 406 to step 408. At step 408, the routine 400 transmits the fused data stream and proceeds to routine 500.

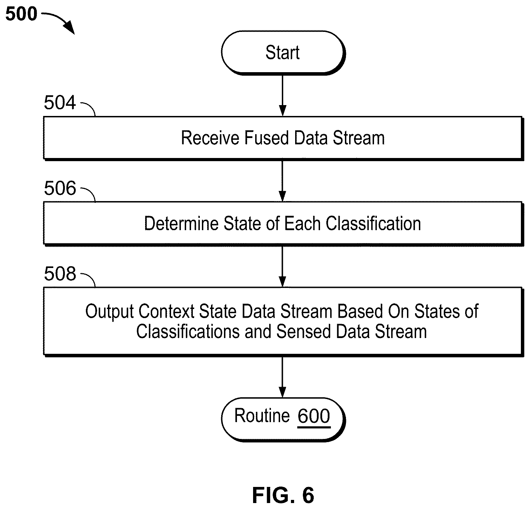

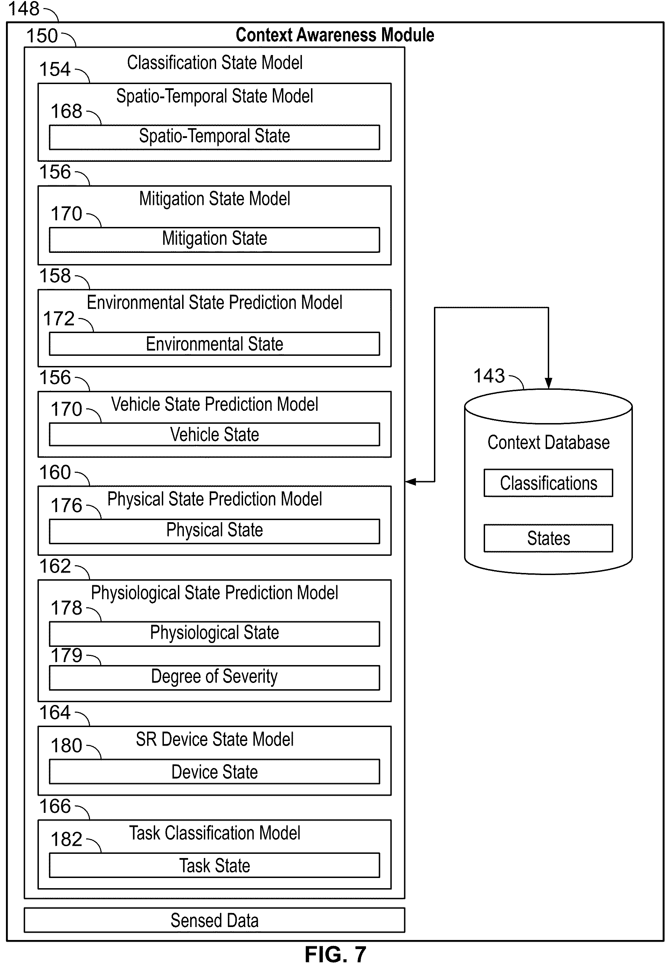

Referring to FIGS. 6 and 7, further details will now be provided for the routine 500 for determining a state for the plurality of classifications. The routine 500 initiates at START and proceeds to step 504. At step 504, the routine 500 receives the fused data stream. After receiving the fused data stream, the routine 500 proceeds from 504 to step 506.

The routine 500 determines a state for each classification using a context awareness module 148 at step 506. The context awareness module 148 includes a classification state model 150. In one form, the classification model 150 may include a single classification model. In other forms, the classification state model 150 includes a plurality of classification models each associated with one of the plurality of classifications. Each classification state model 150 determines the state for each of the plurality of classifications. In one form, the plurality of classification state models 150 include a spatio-temporal state model 154, a mitigation state model 156, an environmental state prediction model 158, a physical state prediction model 160, a physiological state prediction model 162, a device state model 164, and a task state model 166.

In one example, the spatio-temporal state model 154 determines a spatial-temporal state 168 indicative of a spatial-temporal relationship indicating relative movement between a location of the user 10 and a location of the device 102 based on the fused data stream. In some forms, the spatial temporal state also includes a relationship indicating movement between a location of the vehicle relative to the location of the user based on the fused data stream.

In another example, the mitigation state model 156 determines a mitigation state 170 for an execution stage of a previously predicted mitigation strategy based on a mitigation state data. For example, the mitigation state includes not started state, completed state, in operation state, and failed state. In another form, the mitigation state may include a data range indicating an amount or degree of the mitigation completed.

In one form, the environmental state prediction model 158 determines an environmental state 172 of the physical environment of the user 10 based on the fused data stream. For example, the environmental state includes at least one of a windless state, a windy state, an air pressure indication, a temperature indication, and the like. In some forms, the environmental state prediction model 158 includes a vehicle state model 173 that determines a vehicle state 174 for a vehicle classification based on the fused data stream. The vehicle state 174 is indicative of out-of-vehicle state, an in-vehicle state, a vehicle-in-motion state, a vehicle movement metric, a vehicle location, and a vehicle type of the vehicle. In one form, the vehicle movement metric indicates whether a respective vehicle is moving or stationary. In another form, the vehicle type indicates whether the respective vehicle is a simulated vehicle or an auto-driven vehicle.

In another example, the physical state prediction model 160 predicts a physical state 176 of the user 10 for the physical classification based on the fused data stream. The physical state 176 includes one or more of a posture state of the user body (e.g., standing, sitting, etc.), a movement state of the user 10 (e.g., walking, running, jumping, etc.), a proximity state (e.g., in or out) to a vehicle or object, and the like.

In another form, the physiological state prediction model 162 predicts a physiological state 178 indicative of the physiological condition of the user 10 based on the fused data stream. The physiological state 178 may be one of a normal state (not shown), a stressed state (not shown), a cybersickness state (not shown), a motion sickness state (not shown) or a combination thereof. In some forms, the physiological state prediction model 162 also predicts a degree of severity 179 for each physiological state 178 predicted. For example, the degree of severity 179 includes a value or a range of values with each physiological state 178.

In still another example, the device state model 164 determines a device state 180 indicating a viewing mode of the device 102. In one form, the device state 180 indicates a see-through state, a digital view state, a pass-through state operating on the visual display.

The task state model 166 identifies a task state 182 indicating a type of task that the user 10 is attempting while engaging with the device 102 based on an application input from the device 102. For example, the task state 182 includes a state for interacting with a document, a state for interacting with a simulation, a state for program or application (e.g., playing video games), a state for viewing a video, a state for listening to an audio stream, a combination thereof or the like.

In some forms, the routine 500 further determines whether the task state 182 identified matches a previous task state 182 associated with a physiological state 178 indicating one of the cybersickness state, the stress state, the motion sickness state, or a combination thereof. The routine 400 determines whether the previous task state 182 is associated with a previously stored mitigation strategy when the task state 182 identified matches the previous task state 182 associated with the physiological state 178 indicating one of the cybersickness state, the stress state, the motion sickness state or a combination thereof. The routine 400 further retrieves the previously stored mitigation strategy associated with the previously stored task state when the task state 182 identified matches the previous task state 182 as provided above. After retrieving the previously stored mitigation strategy, the routine 400 implements the previously used mitigation strategy prior to the physiological state prediction model 162 predicting the physiological state associated with the cybersickness state, the stress state, the motion sickness state, or a combination thereof.

In one form, the routine 500 stores the respective states for each of the plurality of classifications when the physiological state 178 is equal to the cybersickness state, the stress state, the motion sickness state, or a combination thereof in the context database 143. After determining the state of each classification at step 406, the routine 400 proceeds to step 408.

At step 508, the routine 500 outputs each state for the classifications as a context data stream. In one form, the routine 500 combines each state of the plurality of classifications and at least a portion of the sensed data stream into the context state data stream. Once each state is combined, the routine 500 outputs the context state data stream and proceeds from step 508 to routine 600.

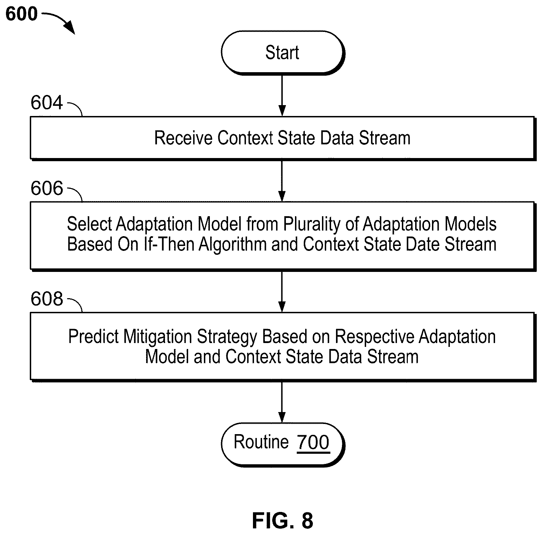

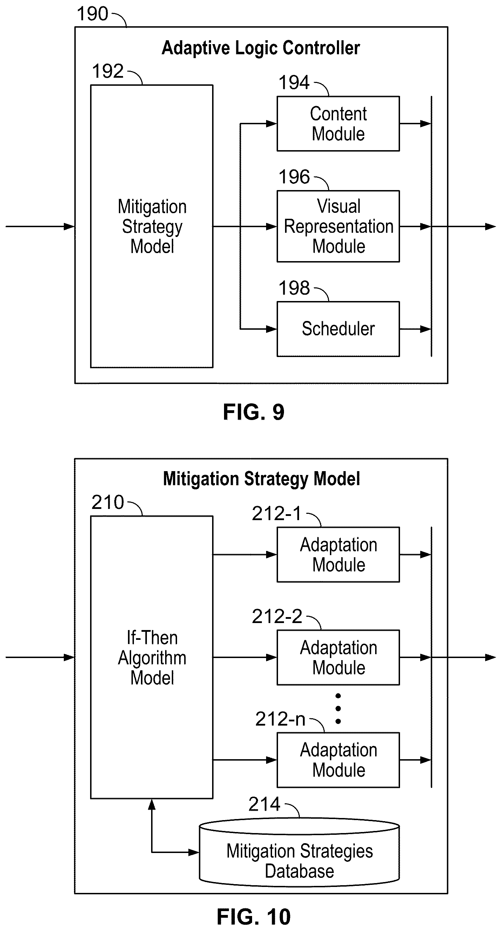

Now referring to FIGS. 8-10, the routine 600 for determining a mitigation strategy will now be further discussed. The routine 600 begins at START and proceeds to step 604. At step 604, the routine 600 receives the context state data stream and proceeds to step 606.

The routine 600 determines a mitigation strategy based on the context state stream data, using an adaptation logic controller 190. The adaptation logic controller 190 includes a mitigation strategy model 192, a content module 194, a visual representation module 196, and a scheduler 198. The mitigation strategy model 192 predicts the mitigation strategy to modify or inhibit a physiological state associated with the cybersickness state, the stress state, the motion sickness state, or a combination thereof. The mitigation strategy model 192 includes an if-then algorithm model 210 and a plurality of adaptation models 212.

At step 606, the routine 600 selects an adaptation model 212-1, 212-2, 212-n from a plurality of adaptation models 212 based on the if-then algorithm model 210 and the context state stream data. The adaptation models 212-1, 212-2, and 212-N shall be referred to collectively and individually as the adaptation model(s) 212. In one form, the if-then algorithm model 210 includes a collection of rules and triggers used to identify how a mitigation (e.g., visual representation, visual display, audio, haptic feedback) is implemented and when to implement a mitigation strategy. In some embodiments, the if-then algorithm model 210 retrieves a list of mitigation strategies from a mitigation strategy database 214 based on the context state data stream. For example, the if-then algorithm model 210 generates a list of mitigation strategies based on one or more of the states associated with the classifications.

In some forms, the list of mitigation strategies may include adjusting/adding visual background cues (e.g., wind patterns), automated background modifications (e.g., static horizon line, auto-adaptive field of view, color adaptation, motion blur), sensory congruence/soft transitions (e.g., adjusting the visuals to match physical motions of the vehicle 108), stabilized imagery (e.g., use gyroscopic data or other inertial sensors to stabilize the imagery in the visual display against any unexpected motion of the vehicle 108), automated scene complexity (e.g., vary complexity of the scene based on a motion of the vehicle 108, reducing details when turns or other complex maneuvers are made), and other engaging peripheral cues (e.g., dampen/blur peripheral vision, using visual elements to anchor a gaze of the user, or light gradients to direct focus of the user) or the like. The if-then algorithm model 210 restricts or selects one or more mitigation strategies from the list of mitigation strategies to form a subgroup of mitigation strategies. In one form, the if-then algorithm model 210 selects an adaptation model 212 from the plurality of adaptation models 212 based on the context state stream data and proceeds from step 606 to step 608.

At the step 608, the routine 600 predicts the mitigation strategy based on the adaptation model 212 selected and the context state data stream. In one example, the adaptation model 212 selected predicts a mitigation strategy from the subgroup of mitigation strategies based on the context state data stream. In one form, each of the adaptation models 212 includes a machine learning model (not shown) for predicting a mitigation strategy to alter the physiological state 178 associated with a user 10 based on the context classification data stream and the subgroup of mitigation strategies. In one example, the machine learning model includes a plurality of model architectures (not shown) such as one or more supervised learning model (not shown), one or more unsupervised learning model (not shown), and one or more neural network models (not shown) (e.g., DNN, CNN, SNN). Each adaptation model 212 predicts one or more mitigation strategies from a subgroup of list of mitigation strategies.

Each adaptation model 212 determines a sequence for each mitigation strategy to be employed, when more than one mitigation strategy is predicted. Each adaptation model 212 also determines whether one mitigation strategy will be employed for a period of time, replaced by another mitigation strategy when multiple mitigation strategies are employed. In one embodiment, each adaptation model 212 determines when to enable or disable a mitigation strategy selected. In some aspects, each adaptation model 212 determines whether to intensify the mitigation strategy selected and a level of intensity for the mitigation strategy selected. In predicting the mitigation strategy, the adaptation model 212 identifies and schedules the display content, visual representation, or a combination to be displayed within a predetermined time frame via the visual display 104.

For example, the routine 600 predicts a mitigation strategy that identifies a visual modification to alter the visual representation being displayed on the visual display 104 and a specific time frame is scheduled to alter the visual representation. After predicting the mitigation strategy, the routine 600 proceeds from step 608 to Routine 700.

The following paragraphs provide examples of utilization of the routine 600 for determining a mitigation strategy and the routine 700 for implementing the mitigation strategy. Using the context state data stream, the routine 600 predicts a mitigation strategy using one or more of the states of the classifications. In some instances, the routine 600 may use only a subgroup of the states associated with the context state data stream. In one example, the routine 600 utilizes the task state 182, the physiological state 178, and the physical state 176 to generate a list of mitigation strategies. The routine 600 also selects an adaptation model 212 based on the context state data stream. The adaptation model 212 predicts a mitigation strategy from the list of mitigation strategies that will mitigate the physiological state 178 associated with the user 10. The mitigation strategy includes, but is not limited to, a display content to be displayed via the visual display 104, a visual modification to alter the visual representation to be displayed on the visual display 104, an audio file to play at a predetermined sound level and/or in a directional of movement or acceleration of the vehicle 108 associated with the user.

In some examples, the routine 700 generates and executes the command codes to control the visual display, one or more audio files, or a combination thereof based on the mitigation strategy. The routine 700 may execute the command codes to control displaying a dialog box having alphanumeric text within the visual display 104. In another example, the routine 700 may generate and execute command codes to create a visual modification to blur a portion of an image displayed, change a contrast to one or more images displayed, create a horizontal line across one or more images, or a combination thereof. In another example, the routine 700 generates and output command codes to modify a directional or accelerating movement of the vehicle 108.

In other examples, the routine 700 generates and executes command codes to display virtual static objects or landmarks with the visual display to provide a point of focus and change the physiological state of the user. In another example, the routine 700 generates and executes control commands to modify or employ static display settings (e.g., single-factor adjustments such as frame rates or simple graphics), field of view settings, gaze-contingent displays, or the like. In still another example, the routine 700 generates and executes control commands to employ multi-modal feedback mechanisms including visual, auditory, and haptic cues. In yet another example, the routine 700 generates and executes control commands to adjust an orientation or digital direction of the visual display to match a moving direction of the vehicle 108.

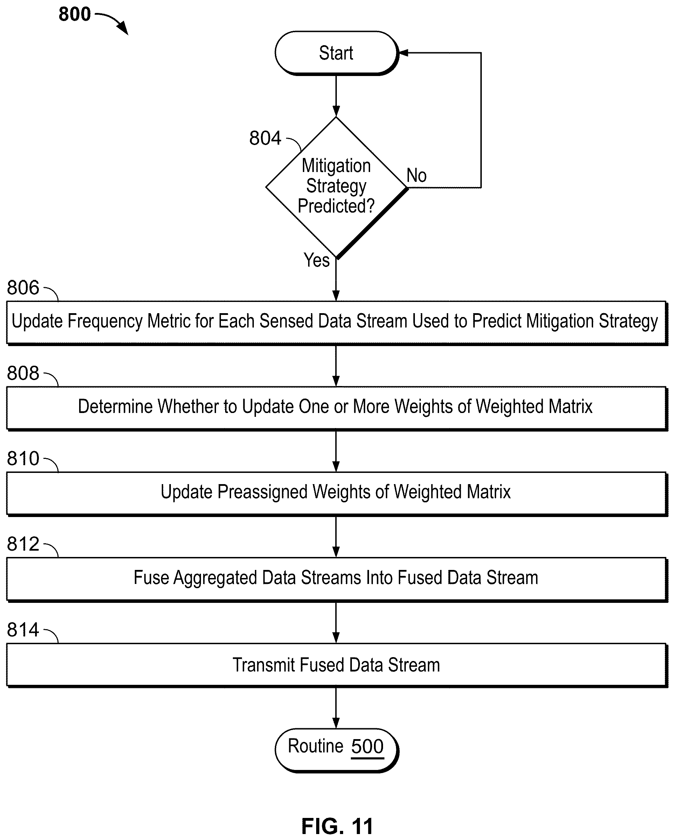

Now referring to FIG. 11, a routine 800 for updating one or more weights of the weighted matrix 147 of the routine 400 is illustrated. The routine 800 tracks a frequency metric to determine how often each sensed data stream for each sensor is utilized by an adaptation model 212 to predict a mitigation strategy. In one form, the frequency metric denotes frequency data of use for each sensed data stream associated with each sensor. The routine 800 dynamically updates a respective weight assigned to one or more of the sensors or its associated sensed data stream based on the frequency metric. The routine 800 initiates at START and proceeds to step 804.

At step 804, the routine 800 determines whether a mitigation strategy has been predicted. If yes, then proceed from step 804 to step 806. If no, proceed from step 804 to RETURN to begin at START.

The routine 800 updates the frequency metric for each sensed data stream or its associated sensor 106 that was used to determine the mitigation strategy. In one form, the routine 800 adds a count for each sensed data stream used to determine the mitigation strategy, at step 806. In this example, the count is the frequency metric. After updating the frequency metric, the routine 800 proceeds from step 806 to step 808.

At step 808, the routine 800 determines whether to update or modify at least one weight of the weighted matrix associated with the plurality of sensors based on the frequency metric. In one form, the routine 800 updates each of the weights based on the frequency metrics. For example, each sensed data stream may have a percentage value based on a total number of mitigation strategies predicted. In this scenario, the routine 800 modifies each or at least one weight based on the percentage value. In another example, the routine 800 determines to update at least one weighted of the weighted matrix based on the frequency metric and a predetermined threshold. For example, the routine 800 compares the frequency metric for each sensed data stream and/or the respective sensor 106 to a predetermined threshold requirement. In one form, each sensed data stream may be individually assigned to a specific threshold requirement. After determining whether to update a weight, the routine 800 proceeds from step 808 to step 810.

At step 810, the routine 800 updates the weights for one or more of the sensed data stream. In another form, the routine 800 updates all of the weights of the weighted matrix based on the frequency metric. From step 810, the routine 800 proceeds to step 812.

The routine 800 fuses the aggregated data streams into the fused data stream using an updated weighted matrix and proceeds from step 812 to step 814. After fusing the aggregated data streams into a fused data stream, the routine 800 transmits an updated fused data stream at step 814 and jumps to routine 500.

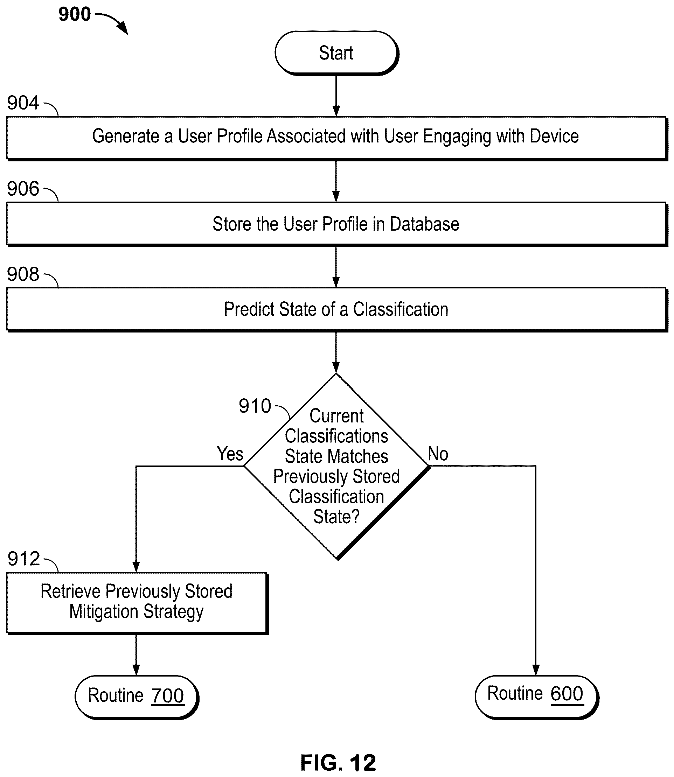

Now referring to FIG. 12, a routine 900 for managing personalized user profiles having historical data and user preferences to determine a mitigation strategy for modifying a physiological state 178 of a user. The routine 900 initiates at START and proceeds to step 904.

At step 904, the routine 900 generates a user profile associated with the user 10 engaging with the device 102. The user profile includes one or more user selected preferences for a mitigation strategy for mitigating a physiological state 178, such as cybersickness, stress, motion sickness, or a combination thereof. In one example, the user selected preferences define a stored mitigation strategy that has successfully modified a prior physiological state 178 of the user 10 within a predetermined period of time. The mitigation strategy associated with the user selected preference includes one or more control commands to control the device 102, the vehicle 108 associated with the device 102, or a combination thereof. In another form, the user selected preference further includes the context state data stream associated with the stored mitigation strategy. After generating the user profile, the routine 900 proceeds from step 904 to step 906.

The routine 900 stores the user profile in a user profile database 224 at step 906 and proceeds to step 908.

At step 908, the routine 900 predicts a state of the plurality of classifications based on the fused data stream. For example, the routine 900 predicts a physiological state 178 for the physiological classification based on the physiological state prediction model 162 and the classified data. The current physiological state 178 is indicative of a current physiological condition of the user. After predicting, the routine 900 proceeds from step 908 to step 910.

The routine 900 determines whether one or more of the states of the classifications of a current context state data stream match one or more stored states of the classifications associated with the stored mitigation strategy at step 910. For example, the routine 900 determines whether a current physiological state 178 matches a stored physiological state 178 associated with the stored mitigation strategy. If yes, the routine 900 proceeds from step 910 to step 912. If no, the routine 900 proceeds to routine 600.

At step 912, the routine 900 retrieves the stored mitigation strategy and proceeds to step 914 and proceeds to Routine 700 (See FIG. 2).

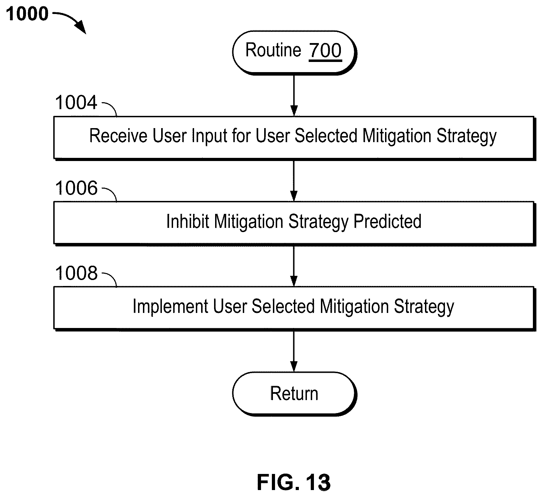

In another embodiment, a routine 1000 for overriding a mitigation strategy using a user input is provided in FIG. 13. The routine 1000 initiates from routine 700 and proceeds to step 1004. Routine 700 implements the mitigation strategy predicted to modify the physiological state 178 associated with the user 10. At step 1004, the routine 1000 receives a user input indicative of a user selected preference for overriding a mitigation strategy being implemented or predicted. For example, the routine 1000 displays a plurality of mitigation strategies associated with each state (e.g., cybersickness, motion sickness, stress, or the like) associated with one or more classifications (e.g., physiological classification) on the visual display to create a user selected mitigation strategy. The routine 1000 receives a user input indicating a selection of one or more mitigation strategies forming a user mitigation strategy. After receiving the user input, the routine 1000 proceeds from step 1004 to step 1006. The routine 1000 inhibits the mitigation strategy predicted at step 1006. The routine 1000 proceeds from step 1006 to step 1008. At step 1008, the routine 1000 implements the user selected mitigation strategy and proceeds to RETURN.

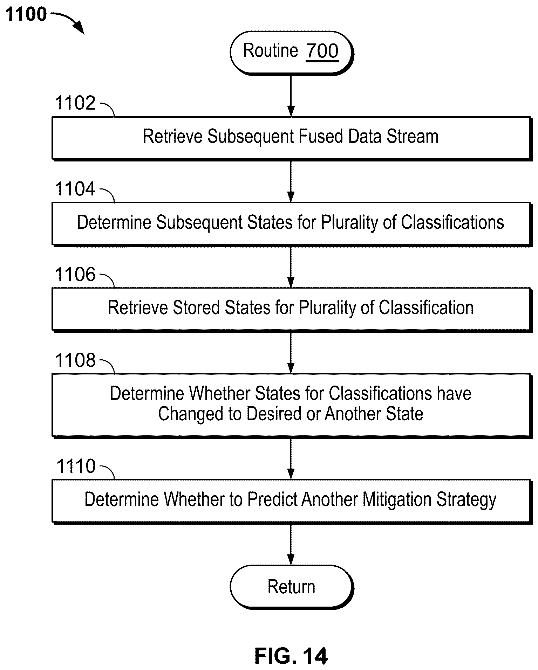

Now referring to FIG. 14, a routine 1100, of the method 200, for updating the mitigation strategy based on feedback of one or more states of the plurality of classifications is provided. The routine 1100 determines whether a mitigation strategy previously predicted, during routine 600, has modified the physiological state 178 of the user 10. The routine 1100 proceeds from routine 700 and proceeds to step 1102.

At step 1102, the routine 1100 retrieves a subsequent fused data stream and proceeds to step 1104.

Based on the subsequent fused data steam, the routine 1100 determines subsequent states for the plurality of classifications after the mitigation strategy predicted has been implemented at step 1104. After determining the subsequent states, the routine 1100 proceeds from step 1104 to step 1106.

At step 1106, the routine 1100 retrieves the stored states for the plurality of classifications and proceeds to step 1108. In one example, the stored states were determined at time T1; and the subsequent states were determined at time T2 after the mitigation strategy has been implemented. The routine 1100 proceeds from step 1108 to step 1108.

The routine 1100 determines whether the states of the classifications have changed to a desired or another state for at least one of the states of the classifications at step 1108. For example, the routine 1100 determines whether the physiological state 178 for the user 10 has changed from a cybersickness state to a normal state. In one form, the routine 1100 compares the stored states of the plurality of classifications to the subsequent states of the plurality of classifications. In another form, the routine 1100 determines whether the task state 182 for the user 10 has changed from a state for reading a document to a state for playing a video game. After determining whether the states have changed to a desired or another state, the routine 1100 proceeds from step 1108 to step 1110.

At step 1110, the routine 1100 determines whether to predict another mitigation strategy based on whether the states of the classifications have changed to i) a desired or another state, ii) a predetermined period of time expires, or iii) a combination of both. In one form, the routine 1100 determines not to predict another mitigation strategy based on whether the states of the classifications have changed to a desired or another state. For example, the routine 1100 determines to predict another mitigation strategy when the state of the physiological classification has changed. In another example, the routine 1100 determines to continue to implement a current mitigation strategy when the physiological state 178 has remained substantially the same. In one example, the routine 1100 determines not to predict another mitigation strategy when the physiological state 178 has been altered from the cybersickness state to a normal state. In another example, the routine 1100 determines to predict another mitigation strategy when at least one state for the classifications has changed and the predetermined time period has expired. After determining whether to predict another mitigation strategy, the routine 1100 proceeds from step 1110 to step RETURN.

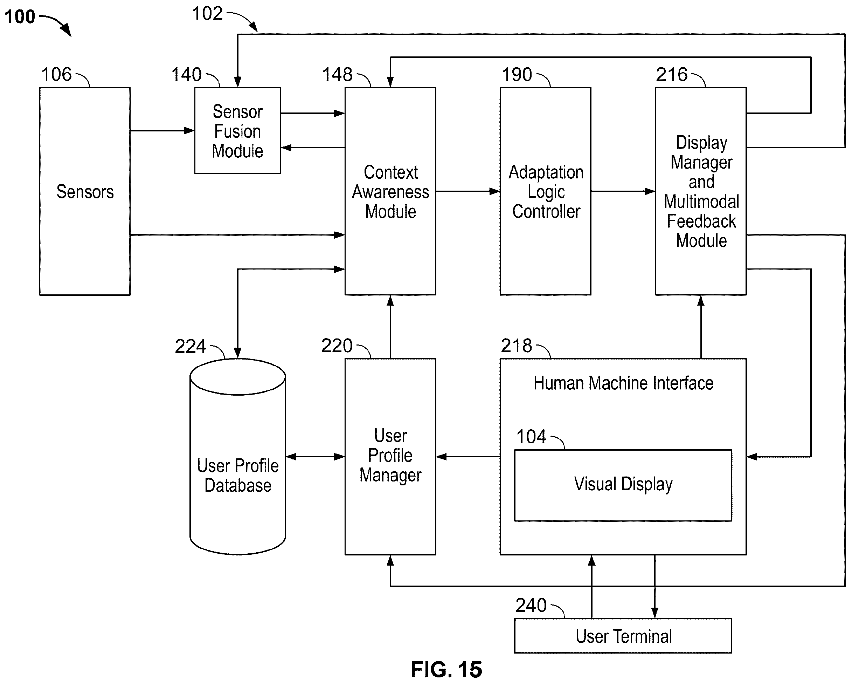

Now referring to FIG. 15, the system 100 is further illustrated for implementing the method 200 having routines 300 - 1100. In one form, the system 100 includes the plurality of sensors 106, the sensor fusion module 140, the context awareness module 148, the adaptation logic controller 190, a display manager and multimodal feedback module 216, a human machine interface 218, a user profile manager 220, and a user profile database 224. In one form, the sensors 106 sense one or more user contextual conditions of the user 10 while engaged with the device 102 and outputs a sensed data stream in response thereof. For example, a user contextual condition is indicative of various biological and physical characteristics of the user, such as a user posture, a user movement, a user eye tracking and gaze, a user biometric characteristic that is obtained while the user 10 engages with the device 102. In one example, the user posture indicates whether the user 10 is sitting and standing. In some forms, the user movement indicates whether the user 10 is motionless or moving.

In this example, the sensor fusion module 140 is electrically coupled to and in communication with the sensors 102 and the context awareness module 148. The sensor fusion module 140 executes routines 300 and 400, respectively, as provided above. Generally, the sensor fusion module 140 receives the sensed data stream and fuses the sensed data stream into a fused data stream. The sensor fusion module 140 includes a plurality of sensor nodes 144 and the sensor fusion model 146. The sensor fusion module 140 directs the sensed data stream from each of the plurality of sensors 106 into one or more of the sensor nodes 144 based on complimentary types of data preselected to determine the state of the plurality of context classifications. Each sensor node 144 processes a received sensed data stream received to form an aggregated data stream of the complimentary types of data. The sensor fusion model 146 receives and fuses the aggregated data stream from each of the sensor nodes forming a fused data stream. In some embodiments, the sensor fusion model 146 includes a weighted matrix 147. The weighted matrix 147 includes a weight for each of the plurality of sensors. The weight is a weighting factor that is assigned to the sensed data stream for each sensor 106 of the plurality of sensors 106 based on at least one of a sensor type, a sensed data metric type relative to an output data transmitted from each sensor, or a combination thereof. Using the weighted matrix 147, the sensor fusion module 140 fuses the aggregated data stream from each of the sensor nodes 144 into the fused data stream. In other embodiments, the sensor fusion module 140 includes a Bayesian Network algorithm to fuse the aggregated data stream from each sensor node 144.

In another form, the sensor fusion module 140 executes routine 800. For example, the sensor fusion module 140 determines whether to update one or more weights of the weighted matrix 147 and fuses the aggregated data streams based on an updated weighted matrix 147.

The context awareness module 142 is in electrical communication with the sensor fusion module 140 and receives the fused data stream. The context awareness module 148 executes routine 500 and determines the state for each classification of the plurality of classifications. The context awareness module 142 includes the classification state model 150 and the context database 143 in electrical communication with the classification state model 150. The classification state model 150 determines a state for a plurality of classifications associated with the user 10 and outputs a context state data stream. In one example, the context state data stream is an aggregated data stream of each of the states of the plurality of classifications, at least a portion of the sensed data stream, or a combination thereof. The context database 143 stores the plurality of classifications along with their respective state determined.

Based on determining the state of the classifications, the adaptation logic controller 190 is in electrical communication with the context awareness module 148 and the display manager and multimodal feedback module 216. The adaptation logic controller 190 executes routine 600 as provided herein. For example, the adaptation logic controller 190 receives the context state data stream and determines a mitigation strategy based on the context state data stream. In another embodiment, the adaptation logic controller 190 executes routine 1100 and determines whether to predict another mitigation strategy for the user 10 after a mitigation strategy has been implemented.

In one form, the display manager and multimodal feedback module 216 (referred to as "DMMF module" hereafter) is coupled to the adaptation logic controller 190 and the human machine interface 218. In one form, the DMMF module 216 executes routine 700 and implements the mitigation strategy. In another form, the DMMF module 216 generates one or more control commands to control the visual display 104, an audio device of the device 102, or a combination thereof based on the mitigation strategy predicted. More specifically, the DMMF module 216 modifies the display content, the visual representation or the combination thereof, based on the one or more control commands.

In one example, the DMMF module 216 controls the field of view and refresh rates of the visual display 104 based on the control commands. To implement the mitigation strategy, the DMMF module 216 schedules the display content, the visual representation or the combination thereof of the visual display 104 for viewing by the user 10 at a predetermined time, generates a control command to display the display content, the visual representation or the combination thereof scheduled on the visual display 104 at the predetermined time; and controls the visual display 104 based on the control command.

In one example, the human machine interface 218 includes a visual display 104 and the audio device that receives the one or more control commands and displays the display content to the user 10 based on the control commands. In one form, the human machine interface 218 is in electrical communication with a user terminal 240 and receives a user selected preference for one or more selected mitigation strategies associated with one or more control commands to modify a visual display 104 on the device 102. In one form, the user terminal 240 may take the form of a gaming controller, a mouse, a keyboard, a computing device, a personal computer, a laptop, a mobile phone, a tablet, or the like. The user terminal 240 receives inputs from the user 10 to manually adjust settings or override previously determined mitigation strategies. For example, the user terminal 240 allows the user 10 to select one or more mitigation strategies. In one form, the user terminal 240 allows the user 10 to select a mitigation strategy and a schedule for the selected mitigation strategies. The user selected preference identifies one or more physiological states 178 for the user 10 to trigger and execute the mitigation strategy when the identified physiological states 178 occur for the user 10.

In some embodiments, the user profile manager 220 is in electrical communication with the human machine interface 218. In one example, the user profile manager executes routine 900 and determines whether to utilize a stored mitigation strategy for the user 10. In another form, the user profile manager 220 executes routine 1000 and determines whether to implement a user selected mitigation strategy. In one form, the user profile manager 220 generates a user profile associated with the user engaging with the device. For example, when a physiological condition has changed based on a mitigation strategy, the user profile manager 220 stores the respective mitigation strategy in a user profile as a mitigation strategy preference along with a previously predicted physiology state mitigated. The mitigation strategy preference defines a previously stored mitigation strategy that changed a previous physiological state of the user 10 within a predetermined period of time. In another embodiment, the user profile manager 220 receives the user selected preference from the human machine interface 218 to creates a user profile to store the user selected preference.

In certain respects, the present disclosure has been described in terms of functional and/or logical block, module, controller, or unit components, and with reference to symbolic representations of operations, processing tasks, and functions that may be performed by various computing components or devices. It should be appreciated that the various block components shown in the figures may be realized by any number of hardware components configured to perform the specified functions. For example, an implementation of a system or a component may employ various integrated circuit components, e.g., memory elements, digital signal processing elements, logic elements, look-up tables, or the like, which may perform a variety of functions under the control of one or more microprocessors or other control devices. Furthermore, implementations of the subject matter described herein can be stored on, encoded on, or otherwise embodied by any suitable non-transitory computer-readable medium as computer-executable instructions or data stored thereon that, when executed (e.g., by a processing system), facilitate the processes described above.

The foregoing description refers to elements or nodes or features being "connected" or "coupled" together. As used herein, unless expressly stated otherwise, "coupled" and "connected" refers to one element/node/feature is directly or indirectly joined to (or directly or indirectly communicates with) another element/node/feature, and not necessarily mechanically. Thus, although the drawings may depict one example arrangement of elements directly connected to one another, additional intervening elements, devices, features, or components may be present in an implementation of the depicted subject matter. In addition, certain terminology may also be used herein for the purpose of reference only and thus are not intended to be limiting.

While at least one example implementation has been presented in the foregoing detailed description, it should be appreciated that a vast number of variations exist. It should also be appreciated that the example implementation or example implementations are only examples, and are not intended to limit the scope, applicability, or configuration of the subject matter in any way. Rather, the foregoing detailed description will provide those skilled in the art with a convenient road map for implementing an example implementation of the subject matter. It should be understood that various changes may be made in the function and arrangement of elements described in an example implementation without departing from the scope of the subject matter as set forth in the appended claims. Accordingly, details of the example implementations or other limitations described above should not be read into the claims absent a clear intention to the contrary.

## Claims

1. A method for mitigating cybersickness of a user engaged in an operation of a 3D-simulated reality device having a visual display, the method comprising:
receiving a sensed data stream indicating a user condition obtained from a plurality of sensors while the user is engaged in the operation of the device, wherein the user condition includes at least one of a user posture, a user movement, a user eye tracking, or a user biometric;
fusing the sensed data stream into a fused data stream based on a sensor fusion model;
determining a state for a plurality of classifications, wherein each state for the plurality of classifications identifies a context of the user while engaged with the device to determine whether the user is susceptible to cybersickness, wherein the step of determining a state further comprises:
predicting a physiological state of the user for a physiological classification based on a physiological state prediction model and the fused data stream;
predicting a physical state of the user for a physical classification based on a physical state prediction model and the fused data stream; and
determining a device state of the visual display being engaged by the user for a device classification based on a visual display data indicating a view mode of the visual display;
determining a mitigation strategy for modifying a display content, a visual representation or a combination thereof based on the physiological state, the physical state, the device state, and a mitigation strategy model; and
implementing the mitigation strategy to change a physiological condition of the user, wherein the step of implementing the mitigation strategy further comprises:
scheduling the mitigation strategy for modifying the visual display viewed by the user at a predetermined time;
generating a control command to implement the mitigation strategy to modify the visual display at the predetermined time; and
controlling the visual display based on the control command.

2. The method of Claim 1, wherein:
the plurality of classifications further includes an environmental classification representing an environment surrounding the user while the user is engaged with the device; and
the step of determining the state for the plurality of classifications further comprises predicting an environmental state for the environmental classification based on the fused data stream and an environmental state model.

3. The method of Claim 2, wherein:
the environmental classification includes a vehicle classification indicative of a vehicle movement metric, a vehicle location, and a vehicle type of a vehicle associated with the user while engaging with the device; and
the step of determining the environmental state for the environmental classification comprises predicting a vehicle state for the vehicle classification based on the fused data stream and a vehicle state model.

4. The method of Claim 1, wherein:
the plurality of classifications further includes a task classification indicating a type of task that the user is engaged in while using the device; and
the step of the determining the state for the plurality of classifications further comprises predicting a task state for the task classification based on the fused streamed data and a task state model.

5. The method of Claim 1, wherein the step of determining the mitigation strategy comprises:
identifying the display content to be displayed via the visual display, wherein the display content includes a dialog box having alphanumeric text being displayed within the visual display;
scheduling the display content to be displayed within a predetermined time frame on the visual display; and
displaying the display content on the visual display of the device.

6. The method of Claim 1, wherein the step of determining the mitigation strategy comprises:
identifying a visual modification to alter the visual representation to be displayed on the visual display;
determining a schedule for the visual modification to alter the visual representation that is displayed on the visual display; and
displaying the visual modification altering the visual representation that is displayed on the visual display according to the schedule.

7. The method of Claim 1, wherein:
the physiological state for the physiological classification includes a cybersickness state, a motion sickness state, a stress state, or a combination thereof; and
the step of the predicting the physiological state for the physiological classification comprises:
predicting that the physiological state for the physiological classification is the cybersickness state; and
determining the mitigation strategy based on the physiological state being the cybersickness state and the mitigation strategy model.

8. The method of Claim 1 further comprising:
combining each state of the plurality of classifications into a context state stream data;
selecting an adaptation model from a plurality of adaptation models based on an if-then algorithm and the context state stream data; and
determining the mitigation strategy based on the context state stream data and the adaptation model selected.

9. The method of Claim 1, wherein the step of fusing the sensed data stream comprises:
directing the sensed data stream from each of the plurality of sensors into one or more sensor nodes based on complimentary types of data preselected to determine the state of the plurality of classifications;
processing the sensed data stream received at each sensor node to form an aggregated data stream of the complimentary types of data; and
fusing each aggregated data stream into a fused data stream based on the sensor fusion model.

10. The method of Claim 1, wherein:
the sensor fusion model is a weighted matrix; and
the step of fusing the sensed data stream further comprises fusing the sensed data stream into the fused data stream based on the weighted matrix and the sensed data stream.

11. The method of Claim 10 further comprising assigning a weight to the sensed data stream for each sensor of the plurality of sensors based on a sensor type, a sensed data metric type relative to an output stream transmitted from each sensor, or a combination thereof.

12. The method of Claim 11 further comprising:
tracking a frequency data of use for each sensed data stream associated with each sensor, wherein the frequency data of use indicates how often each sensed data stream associated with each sensor is used for predicting the mitigation strategy;
determining whether to modify the weight associated with at least one sensor of the plurality of sensors based on the frequency data; and
determining an updated weight for the at least one sensor based on the frequency data; and
applying the updated weight to the sensed data stream associated with the at least one sensor to form the fused data stream.

13. The method of Claim 1 further comprising:
creating a user profile having a user selected preference associated with the control command; and
modifying the control command based on the user selected preference.

14. The method of Claim 13 further comprising:
determining when the physiological state of the user has changed within a period of time; and
storing the mitigation strategy in the user profile when the physiological state of the user has changed.

15. The method of Claim 1 further comprising:
generating a user profile associated with the user engaging with the device, wherein the user profile includes a mitigation strategy preference defining a previously stored mitigation strategy that changed a previous physiological state of the user within a predetermined period of time;
predicting a current physiological state for the physiological classification based on the physiological state prediction model and the fused data set, wherein the current physiological state is indicative of the physiological condition of the user;
determining whether the current physiological state of the physiological classification associated with the user matches the previous physiological state associated with the mitigation strategy preference; and
retrieving the previously stored mitigation strategy when the current physiological state matches the previous physiological state associated with the mitigation strategy preference; and implementing the previously stored mitigation strategy for controlling the visual display.
